# FASCICULE DE BREVET EUROPEEN

(11) **EP 1 141 641 B1**
(45) Date de publication et mention de la délivrance du brevet: **02.02.2005**
(21) Numéro de dépôt: 99957365.2
(22) Date de dépôt: 03.12.1999
(51) Int. Cl.: F25D 29/00

(54) **SYSTEME POUR LA TRACABILITE DE PRODUITS**
SYSTEM ZUR RUECKVERFOLGBARKEIT VON PRODUKTEN
SYSTEM FOR TRACEABILITY OF PRODUCTS

(30) Priorité: 03.12.1998 FR 9815297
(43) Date de publication de la demande: 10.10.2001
(73) Titulaire: Bara, Nicolas, 60240 La Villetertre (FR); Diot, Jean-Claude, 51500 Ludes (FR); Lambert, Dominique, 95520 Osny (FR)
(72) Inventeur: Bara, Nicolas, 60240 La Villetertre (FR); Diot, Jean-Claude, 51500 Ludes (FR); Lambert, Dominique, 95520 Osny (FR)
(74) Mandataire: Breese, Pierre
(86) Numéro de dépôt international: PCT/FR1999/003015
(87) Numéro de publication internationale: WO 2000/033005

(56) Documents cités:
- EP-A- 0 142 688
- EP-A- 0 851 377
- WO-A-94/27117
- DE-U- 29 812 877
- GB-A- 2 308 947
- US-A- 5 798 694
- PATENT ABSTRACTS OF JAPAN vol. 099, no. 003, 31 mars 1999 (1999-03-31) & JP 10 316210 A (HITACHI LTD), 2 décembre 1998 (1998-12-02) cité dans la demande
- PATENT ABSTRACTS OF JAPAN vol. 098, no. 005, 30 avril 1998 (1998-04-30) & JP 10 009753 A (MATSUSHITA REFRIG CO LTD), 16 janvier 1998 (1998-01-16)

## Description

La présente invention concerne le domaine du stockage et de la conservation de produits dans une enceinte thermostatée, notamment dans un réfrigérateur ou un congélateur. Il concerne plus particulièrement le domaine du stockage de consommables et de réactifs biomédicaux, la conservation d'organes pour la transplantation, présentant une faible tolérance aux variations thermiques et nécessitant une gestion des stocks rigoureuse.

On connaît dans l'état de la technique le brevet allemand DE29812877 qui décrit un réfrigération comprenant un moyen de lecture d'un élément transpondeur apposé sur des produits réfrigéré, l'élément transpondeur comportant un code d'idenfication.

On connaît également le brevet japonais JP10316210 décrivant un réfrigérateur pour le stockage de produit alimentaires, ou les brevets européens EP142688 ou EP851377.

On connaît également le brevet US5798694 décrivant un système comportant des articles sensibles à la température et des moyens d'identification radiofréquence et un équipement comportant une enceinte thermostatée munie d'une ouverture, de moyens de contrôle du contenue de l'enceinte constitués par un récepteur radiofréquence relié à une antenne ainsi que de moyens fournissant des données auxdits moyens d'identification équipant lesdits articles.

Ces équipements ne sont pas exploitables pour la gestion d'articles biologiques, nécessitant une grande rigueur dans le respect des conditions d'utilisation et des cycles thermiques.

Pour de tels articles biologiques, on a proposé dans l'état de la technique des enceintes thermostatées robotisées. Elle comportent des manipulateurs électromécaniques commandés par un calculateur conservant en mémoire les mouvements des articles qui sont manipulés. De tels équipements sont très onéreux, et ne sont pas totalement fiables. En effet, une modification volontaire ou involontaire de l'emplacement des produits dans l'enceinte perturbent gravement le traitement des informations, uniquement fondé sur la position du bras manipulateur au moment du dépôt de chaque article. Si la position est modifiée autrement que par le bras manipulateur, le calculateur ignorera cette modification, et fournira des informations erronées.

L'objet de la présente invention est de remédier à ces inconvénients en proposant un équipement de plus grande fiabilité, et dont le surcoût par rapport à une enceinte ou un caisson thermostatée simple est faible, et permettant une gestion rigoureuse des conditions d'utilisation et une parfaite traçabilité des conditions opératoires. Le but est en particulier de permettre une association irréversible entre les données relatives à la vie de l'article et l'article en question, et de garantir une continuité des informations afin d'en permettre une exploitation sûre par d'autres équipements.

A cet effet, l'invention concerne dans son acception la plus générale un système conforme à la revendication 1 et un article conforme à la revendication 10.

Avantageusement, cette antenne est disposée au voisinage de l'ouverture de l'enceinte, pour la détection des mouvements des articles munis d'un moyen d'identification radiofréquence. L'enceinte selon l'invention peut se présenter sous forme d'armoire ou d'un caisson transportable.

Avantageusement, comporte en outre un moyen d'activation des moyens d'identification RF des articles.

De préférence, le moyen d'activation des moyens d'identification RF des articles est commandé par un détecteur d'ouverture de la porte de l'enceinte.

Selon une variante avantageuse, elle comporte un calculateur pour l'enregistrement d'informations relatives à l'identité des articles dont la présence est détectée, en corrélation avec les informations temporelles fournies par une horloge.

Selon une autre variante, elle comporte des moyens de signalisation activés par la sortie d'un article pendant une durée supérieure à une valeur prédéterminée.

Selon une autre variante encore, elle comporte des moyens de signalisation activés par un compteur d'articles commandé par la détection des moyens d'identification RF associés à chaque article.

L'article comporte une mémoire destinée à enregistrer des informations relatives aux conditions de stockage, notamment des informations datées, de façon à assurer la traçabilité des articles.

L'invention concerne également des articles sensibles à la température, pour le stockage dans une enceinte réfrigérée comportant chacun une étiquette d'identification RF spécifique. De préférence, cette étiquette comporte par ailleurs une mémoire dans laquelle sont enregistrées des données relatives aux conditions de stockage et/ou de transport.

Avantageusement, chaque article comporte en outre un capteur de température commandant l'état de l'identifiant transmis par l'étiquette RF.

Selon une variante spécifique, l'étiquette RF comporte une antenne et un circuit intégré comportant un étage RF, un étage de modulation du signal RF et une mémoire comportant une séquence d'identification spécifique pour la personnalisation du signal de modulation.

Selon une autre variante particulière, l'article selon l'invention est formé par un récipient muni d'une étiquette d'identification RF.

L'invention sera mieux comprise à la lecture de la description qui suit, se référant à un exemple non limitatif de réalisation.

L'enceinte est constituée par une enceinte frigorifique fermée par une porte. Elle comporte des plateaux pour recevoir différents articles, par exemple des organes destinés à la transplantation, des poches à sang, des réactifs biochimiques et des produits biologiques. Ces articles sont notamment des poches à sang comportant des étiquettes R.F. à lecture-écriture, ou des consommables de laboratoire avec un circuit intégré ou hybride RF à mémoire ou encore une sérothèque à circuit RF. Chaque plateau présente une antenne de détection permettant d'interroger les étiquettes radiofréquence équipant les articles entreposés.

Cette antenne de détection transmet les informations d'entrée et de sortie de chaque consommable ou article marqué à un calculateur doté d'une mémoire et d'une horloge. Ces informations permettent de connaître à tout moment :
- la position des différents articles dans le réfrigérateur
- le temps de sortie de l'article
- l'état du stock
- les conditions de conservation

La lecture des étiquettes radiofréquence peut être activée périodiquement, ou, de préférence, par le contacteur détectant l'ouverture de la porte. Cet équipement permet de garantir la traçabilité des produits réfrigérés, y compris lorsque ceux-ci sont transporté dans un autre équipement muni de moyen de lecture avec l'étiquette RF dudit article.

Les étiquettes radiofréquence équipant les articles peuvent être des étiquettes comprenant un micro-calculateur en forme de circuit intégré comportant une alimentation par batterie ou par boucle H.F., ainsi qu'une antenne. Eventuellement, une mémoire est destinée à enregistrer les informations transmises par les articles introduits, ce qui permet d'échanger des informations de reprise d'un article provenant d'une autre enceinte.

Elles peuvent également comporter un capteur de température ou d'hygrométrie.

Les micro-calculateurs comportent par ailleurs une zone de mémoire pour l'enregistrement d'informations de personnalisation permettant de commander la séquence de signaux transmis au moment de l'activation de l'étiquette.

Les étiquettes RF équipant les articles destinés à être réfrigérés sont munies d'une mémoire. Cette mémoire permet l'enregistrement d'information relatives aux cycles thermiques, sous forme d'un fichier comportant un identifiant formé de la date et l'heure du début d'une période, les conditions thermiques, et éventuellement une données d'alerte. L'adresse d'un nouveau cycle est déclenché périodiquement par l'équipement réfrigéré.

L'étiquette RF peut être une étiquette d'émission et de réception, ou une étiquette d'émission simple, ou encore une étiquette de réception simple.

Dans le premier cas ou le dernier cas, la mémoire de l'étiquette enregistrera les données fournies par l'équipement, en réponse à l'activation produite lors de l'introduction de l'article dans l'enceinte réfrigérée.

Dans le second cas, la mémoire enregistrera les données lors de l'activation du signal d'émission.

## Revendications

1. Système pour la traçabilité de produits, comportant d'une part des articles sensibles à la température, et des moyens d'identification radiofréquence, et d'autre part un équipement comportant une enceinte thermostatée munie d'une ouverture pour l'introduction et le retrait d'articles, de moyens de contrôle du contenu de l'enceinte constitués par au moins un récepteur radiofréquence relié à une antenne pour la détection des mouvements des articles ainsi que de moyens fournissant des données auxdits moyens d'identification radiofréquence,
lesdits moyens d'identification radiofréquence équipant lesdits articles et comportant une mémoire pour l'enregistrement périodique des données relatives aux conditions de stockage sous forme de fichiers correspondant à un cycle thermique, comportant un identifiant formé de la date et de l'heure de début du cycle et les conditions thermiques, lesdites données étant fournies par ledit équipement et étant associées de manière irréversible auxdits articles.

2. Système selon la revendication 1 **caracterisé en ce que** lesdits fichiers comportent entre outre une donnée d'alerte.

3. Système selon la revendication 1 ou 2, **caractérisé en ce que** l'équipement comporte en outre un moyen d'activation des moyens d'identification RF des articles.

4. Système selon la revendication 3, **caractérisé en ce que** le moyen d'activation des moyens d'identification RF des articles est commandé par un détecteur d'ouverture de la porte de l'enceinte.

5. Système selon l'une au moins des revendications précédentes, **caractérisé en ce que** ledit équipement comporte un calculateur pour l'enregistrement d'informations relatives à l'identité des articles dont la présence est détectée, en corrélation les informations temporelles fournies par une horloge.

6. Système selon la revendication 5, **caractérisé en ce que** ledit équipement comporte des moyens de signalisation activés par la sortie d'un article pendant une durée supérieure à une valeur prédéterminée.

7. Système selon la revendication 5, **caractérisé en ce que** l'équipement comporte des moyens de signalisation activés par un compteur d'articles commandé par la détection des moyens d'identification RF associés à chaque article.

8. Système selon l'une quelconque des revendications précédentes, **caractérisé en ce que** l'article est une poche à sang.

9. Système selon l'une quelconque des revendications précédentes, **caractérisé en ce que** l'article est un réactif.

10. Article sensible à la température pour un système conforme à l'une quelconque des revendications précédentes, comportant une étiquette d'identification radiofréquence comportant une mémoire pour l'enregistrement périodique et irréversible des données relatives aux conditions de stockage sous forme de fichiers correspondant à un cycle thermique, comportant un identifiant formé de la date et de l'heure de début du cycle et les conditions thermiques.

11. Article selon la revendication 10 **caractérisé en ce que** lesdits fichiers comportent en outre une donnée d'alerte.

12. Article selon la revendication 10 ou 11, **caractérisé en ce qu'**il comporte en outre un capteur de température commandant l'état de l'identifiant transmis par l'étiquette RF.

13. Article selon la revendication 9 ou 10, **caractérisé en ce que** l'étiquette RF comporte une antenne et un circuit intégré comportant un étage RF, un étage de modulation du signal RF et une mémoire comportant une séquence d'identification spécifique pour la personnalisation du signal de modulation.

14. Article selon l'une quelconque des revendications 10 à 13, **caractérisé en ce qu'**il est formé par un récipient muni d'une étiquette d'identification RF.

15. Article selon l'une au moins des revendications 10 à 14, **caractérisé en ce que** l'article est une poche à sang.

## Claims

1. System for the traceability of products comprising firstly articles sensitive to temperature, and radiofrequency identification means, and secondly an equipment comprising a thermostat-controlled chamber provided with an opening for inserting and removing articles, means for checking the contents of the chamber consisting of at least one radiofrequency receiver connected to an antenna for the detection of article movements, and means supplying data to the said radiofrequency identification means, the said radiofrequency identification means being fitted on the said articles and comprising a memory for the periodic recording of data related to storage conditions in the form of files corresponding to a thermal cycle, comprising an identifier formed of the cycle start date and time and temperature conditions, the said data being supplied by the said equipment and being irreversibly associated with the said articles.

2. System according to claim 1, **characterised in that** the said files include an alert data.

3. System according to claim 1 or 2, **characterised in that** the equipment also comprises a means of actuating the RF identification means of the articles.

4. System according to claim 3, **characterised in that** the means of actuating the RF identification means of the articles is controlled by a chamber door opening detector.

5. System according to at least one of the previous claims, **characterised in that** the said equipment comprises a computer for recording information related to the identity of the articles whose presence is detected, in correlation with time information supplied by a clock.

6. System according to claim 5, **characterised in that** the said equipment comprises signalling means activated by the removal of an article for a duration of more than a predetermined value.

7. System according to claim 5, **characterised in that** the equipment comprises signalling means activated by an article counter controlled by the detection of RF identification means associated with each article.

8. System according to any one of the previous claims, **characterised in that** the article is a blood pack.

9. System according to any one of the previous claims, **characterised in that** the article is a reagent.

10. Article sensitive to temperature for a system complying with any one of the previous claims, comprising a radiofrequency identification label comprising a memory for the periodic and irreversible recording of data related to storage conditions conditions in the form of files corresponding to a thermal cycle, comprising an identifier formed of the cycle start date and time and temperature conditions.

11. Article according to claim 10, **characterised in that** the said files also comprise an alert data.

12. Article according to claim 10 or 11, **characterised in that** it also comprises a temperature sensor controlling the state of the identifier transmitted by the RF label.

13. Article according to claim 9 or 10, **characterised in that** the RF label comprises an antenna and an integrated circuit comprising an RF stage, an RF signal modulation stage and a memory comprising a specific identification sequence for the customisation of the modulation signal.

14. Article according to any of claims 10 to 13, **characterised in that** it is formed from a receptacle provided with an RF identification label.

15. Article according to at least one of claims 10 to 14, **characterised in that** the article is a blood pack.

## Patentansprüche

1. System zur Rückverfolgbarkeit von Produkten, einerseits bestehend aus temperaturempfindlichen Artikeln und Radiofrequenz-Identifikationsmitteln und andererseits aus einer Ausrüstung mit einem Thermostatgehäuse, welches mit einer Öffnung zur Einführung und Entnahme von Artikeln versehen ist, aus Mitteln zur Prüfung des Gehäuseinhalts durch mindestens einen Radiofrequenzempfänger, welcher mit einer Antenne zur Erfassung der Artikelbewegungen verbunden ist sowie Mitteln zur Beistellung von Daten für die besagten Radiofrequenz-Identifikationsmittel, wobei die besagten Radiofrequenz-Identifikationsmittel die besagten Artikel ausrüsten und einen Speicher zur periodischen Aufzeichnung der sich auf die Lagerbedingungen beziehenden Daten beinhalten in Form von einem Wärmezyklus entsprechenden Dateien mit einem aus Datum und Uhrzeit des Zyklusbeginns dargestellten Kennzeichen und den Wärmebedingungen.

2. System nach Anspruch 1, **dadurch gekennzeichnet, dass** die besagten Dateien unter anderem eine Warninformation beinhalten.

3. System nach Anspruch 1 oder 2, **dadurch gekennzeichnet, dass** die Ausrüstung unter anderem ein Mittel zur Aktivierung der RF-Identifikationsmittel der Artikel beinhaltet.

4. System nach Anspruch 3, **dadurch gekennzeichnet, dass** das Mittel zur Aktivierung der RF-Identifikationsmittel der Artikel über einen Öffnungsdetektor der Gehäusetür gesteuert wird.

5. System nach mindestens einem der vorausgehenden Ansprüche, **dadurch gekennzeichnet, dass** die besagte Ausrüstung einen Rechner zur Aufzeichnung von Informationen zur Identität der Artikel beinhaltet, deren Anwesenheit in Wechselbeziehung mit den von einem Zeitgeber beigestellten Zeitinformationen erfasst wird.

6. System nach Anspruch 5, **dadurch gekennzeichnet, dass** die besagte Ausrüstung Mittel zur Signalisierung umfasst, welche durch den Austritt eines Artikels während einer einen vorgegebenen Wert überschreitenden Dauer aktiviert werden.

7. System nach Anspruch 5, **dadurch gekennzeichnet, dass** die Ausrüstung Mittel zur Signalisierung beinhaltet, welche über einen Artikelzähler, dessen Steuerung über die jedem Artikel zugeordnete Detektion der RF-Identifikationsmittel erfolgt, aktiviert werden.

8. System nach einem der vorausgehenden Ansprüche, **dadurch gekennzeichnet, dass** der Artikel ein Blutbeutel ist.

9. System nach einem der vorausgehenden Ansprüche, **dadurch gekennzeichnet, dass** der Artikel ein Reagens ist.

10. Temperaturempfindlicher Artikel für ein System nach einem der vorausgehenden Ansprüche, welches ein Radiofrequenz-Identifikationsetikett mit einem Speicher für die periodische und irreversible Aufzeichnung der sich auf die Lagerbedingungen beziehenden Daten beinhaltet in Form von einem Wärmezyklus entsprechenden Dateien mit einem aus Datum und Uhrzeit des Zyklusbeginns dargestellten Kennzeichen und den Wärmebedingungen.

11. Artikel nach Anspruch 10, **dadurch gekennzeichnet, dass** die besagten Dateien ferner eine Warninformation beinhalten.

12. Artikel nach Anspruch 10 oder 11, **dadurch gekennzeichnet, dass** er ferner einen Temperaturgeber aufweist, welcher den Zustand der vom RF-Etikett übertragenen Identifikation steuert.

13. Artikel nach Anspruch 9 oder 10, **dadurch gekennzeichnet, dass** das RF-Etikett eine Antenne und eine integrierte Schaltung mit einer RF-Stufe, einer RF-Signalmodulationsstufe und einem Speicher mit einer spezifischen Identifikationssequenz zur Personalisierung des Modulationssignals beinhaltet.

14. Artikel nach einem der Ansprüche 10 bis 13, **dadurch gekennzeichnet, dass** er aus einem Behälter mit einem RF-Identifikationsetikett versehen ist.

15. Artikel nach einem der Ansprüche 10 bis 14, **dadurch gekennzeichnet, dass** der Artikel ein Blutbeutel ist.
